# EUROPÄISCHE PATENTSCHRIFT

(11) **EP 3 392 811 B1**
(45) Veröffentlichungstag und Bekanntmachung des Hinweises auf die Patenterteilung: **18.08.2021**
(21) Anmeldenummer: 17167585.3
(22) Anmeldetag: 21.04.2017
(51) Int. Cl.: G06Q 10/02, G06Q 10/00

(54) **DATENVERTEILUNGSSYSTEM UND -VERFAHREN FÜR EINE GRUPPE VON ELEKTRONISCHEN GERÄTEN**
SYSTEM AND METHOD FOR DISTRIBUTING DATA TO A GROUP OF ELECTRONIC DEVICES
SYSTÈME ET PROCÉDÉ DE DISTRIBUTION DES DONNÉES À DES APPAREILS ÉLECTRONIQUES

(43) Veröffentlichungstag der Anmeldung: 24.10.2018
(73) Patentinhaber: Leica Geosystems AG, 9435 Heerbrugg (CH)
(72) Erfinder: WINISTÖRFER, Martin, CH-9453 Eichberg (CH); REIMANN, Bernd, CH-9435 Heerbrugg (CH); RANA, Asif, 9443 Widnau (CH)
(74) Vertreter: Kaminski Harmann

(56) Entgegenhaltungen:
- EP-A1- 3 002 742
- WO-A1-2013/063507
- WO-A1-2016/179271
- US-A1- 2015 286 209

## Beschreibung

Die vorliegende Erfindung betrifft ein System und Verfahren zum Verteilen von Daten für eine Gruppe von mindestens zwei elektronischen Geräten, insbesondere Mietgeräten.

Bei den Mietgeräten handelt es sich insbesondere um solche Geräte, die beim Bau von Gebäuden oder anderen Strukturen zum Einsatz kommen, beispielsweise im Rahmen von Messaufgaben im Bereich der Bauinstallation. Dies umfasst sowohl Geräte zur optischen Abstandsmessung oder zur Erfassung von dreidimensionalen Koordinaten entfernter Objekte wie Theodoliten, Tachymeter, Totalstationen, Lasertracker, Laserscanner oder handgehaltene Entfernungsmessgeräte, als auch Rotations-, Kanalbau- oder Linienlaser oder Kabeldetektoren.

Solche für professionelle Anwendungen gedachten, insbesondere hochpräzisen Geräte sind relativ teuer in der Anschaffung. Es ist folglich wünschenswert, wertvolle Vermessungsgeräte nicht zu kaufen sondern statt dessen für begrenzte Zeiträume, in denen sie benötigt werden, zu mieten.

In der Regel werden mehrere gleiche oder verschiedene Geräte gleichzeitig und für denselben Zeitraum angemietet, insbesondere dann, wenn es sich um zusammenwirkende Geräte handelt. Zusammenwirkende Geräte können beispielsweise ein Laserstrahl-Projektionsgerät und ein oder mehrere Empfängergeräte für den projizierten Laserstrahl darstellen, wie z. B. in der EP 2 741 049 A1 beschrieben.

US 2015/0286209 A1 beschreibt ein System bestehend aus einem zentralen Computer, einem oder mehreren mobilen Geräten und einem oder mehreren elektrischen Werkzeugen. Das System erlaubt ein Überwachen und Regulieren des Betriebs der Werkzeuge. Häufig weisen die genannten Geräte ausserdem eine Vielzahl von Funktionen auf, die einzeln freischaltbar bzw. sperrbar sind, sodass dasselbe Gerät zu unterschiedlichen Preisen vermietet werden kann, je nachdem welche und wie viele seiner Funktionen für den jeweiligen Kunden freigeschaltet werden sollen.

Bei einer Vielzahl von zu vermietenden Geräten ist das Aktualisieren mietvertragrelevanter Daten in den einzelnen Mietgeräten, also beispielsweise der bereitgestellten Konfiguration, oder die korrekte Verteilung von Lizenzschlüsseln eine arbeitsintensive und fehleranfällige Aufgabe. Es ist daher wünschenswert, eine Vermietung dieser Geräte für Mieter wie Vermieter zu vereinfachen.

Insbesondere ist es wünschenswert, dass mietvertragsrelevante Informationen, wie z. B. eine Vertragsnummer, ein festgelegtes Rückgabedatum oder die gewählte Konfiguration, auf jedem der Geräte angezeigt werden, um Ausgabe und Rücknahme der Geräte für den Vermieter, sowie Verwendung und Rückgabe für den Mieter einfacher zu gestalten. Weiterhin wäre es für den Vermieter vorteilhaft, wenn die Geräte nötige Wartungstermine selbständig anzeigen würden.

Vorteilhaft wäre daher ein System bzw. Verfahren, das ein einfaches Verteilen von Daten in einer Gruppe von elektronischen Geräten erlaubt, sowie die so verteilten Daten auf den Geräten für einen Benutzer darzustellen.

Bekannte Konzepte sind für sich genommen jedoch nicht dafür konzipiert, die nötigen Merkmale bereitzustellen.

Für Mietgeschäfte können bislang herkömmliche Etiketten verwendet werden. Für einen Vermieter wäre es aber äusserst aufwendig, die vermieteten Geräte für jedes Mietgeschäft jeweils neu mit herkömmlichen Etiketten zu kennzeichnen. Eine elektronische Lösung mit automatisierten Etiketten, bei welcher der Vermieter die Informationen nicht händisch aktualisieren muss, wenn sie an einen Endkunden ausgegeben werden, wäre daher aufgrund der möglichen wesentlichen Zeitersparnis vorteilhaft.

Aus dem Stand der Technik sind sogenannte Smart Labels bekannt, die einen passiven RFID-Transponder umfassen und beispielsweise samt Antenne auf eine Folie aufgebracht werden, die auf ein Produkt geklebt wird. Die Daten aktuell zu halten, ist mit diesen Lösungen jedoch nicht nur sehr aufwendig, sondern es ist nachteilig auch keine Datenaktualisierung mehr möglich, während die Geräte bereits beim Kunden sind.

Weiterhin ist der Einsatz elektronischer Etiketten, sogenannter E-Label, beispielsweise zur Preisauszeichnung am Warenregal bekannt. Die E-Labels sind zentral aktualisierbar und zeigen dann den aktuellen Preis für die jeweils ausgezeichneten im Regal befindlichen Produkte an. Das Anbringen solcher E-Label an beweglichen Objekten ist jedoch problematisch. Wenn die E-Label zentral auch aus der Ferne aktualisierbar sollen, benötigen sie jeweils entsprechende Mobilfunkeinheiten zum Empfang der Daten, sowie Rechenkapazität zum Entschlüsseln und ggf. Auswerten der Daten. Dadurch werden die E-Label nicht nur relativ gross und schwer sondern verbrauchen auch viel elektrische Energie. Gerade bei relativ kleinen handhaltbaren Geräten wäre dies sehr nachteilig.

Es ist daher eine Aufgabe der vorliegenden Erfindung, ein verbessertes System und Verfahren zum Verteilen von Daten in einer Gruppe von elektronischen Geräten bereitzustellen.

Eine weitere Aufgabe ist es, die so verteilten Daten auf den Geräten darstellbar zu machen.

Eine weitere Aufgabe ist es, die zu verteilenden Daten der Gruppe aus der Ferne zu übermitteln, beispielsweise über eine Internet-Verbindung.

Eine weitere Aufgabe ist es, eine Vollständigkeitsprüfung der Geräte der Gruppe zu erleichtern.

Eine weitere Aufgabe ist es, ein solches System und Verfahren bereitzustellen, mit welchem ein Vermieten der Gruppe von Geräten erleichtert wird, insbesondere wobei ein Zeitaufwand zum Rekonfigurieren reduziert wird.

Eine weitere Aufgabe ist es, die Arbeitseffizienz zu erhöhen, insbesondere dadurch dass die Gefahr reduziert wird, dass falsche oder falsch konfigurierte Geräte ausgegeben und eingesetzt werden.

Eine weitere Aufgabe ist es, ein solches System zu geringen Kosten und mit geringem konstruktivem Aufwand bereitzustellen.

Eine weitere Aufgabe ist es, ein solches System bereitzustellen, dass auch bei kleinen Geräten und Geräten mit geringer Speicher-und Rechenleistung anwendbar ist, insbesondere die Funktionsfähigkeit dieser Geräte nicht beeinträchtigt, und handgehaltene Geräte nicht unhandlich macht.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erster Aspekt der vorliegenden Erfindung betrifft ein System zum Verteilen von Daten für eine Gruppe von mindestens zwei elektronischen Geräten, die eine Vielzahl von einzeln freischaltbaren Funktionen aufweisen, wobei die zusammenwirkenden elektronischen Geräte mindestens ein Laserstrahl-Projektionsgerät und mindestens ein zum Empfangen eines Laserstrahls des Laserstrahl-Projektionsgerätes ausgestaltetes Laserstrahl-Empfangsgerät aufweisen, wobei das Laserstrahl-Projektionsgerät und das mindestens eine Laserstrahl-Empfangsgerät dazu ausgestaltet sind, beim Bau von Gebäuden oder anderen Strukturen im Rahmen von Messaufgaben im Bereich der Bauinstallation zum Einsatz zu kommen, und dazu bestimmt sind, im Einsatz gemeinsam verwendet zu werden und operativ zusammenzuwirken.

Dabei weist eines der Geräte eine erste elektronische Kommunikationseinheit auf, und das andere Gerät oder die anderen Geräte weisen jeweils eine weitere Kommunikationseinheit auf. Die Kommunikationseinheiten sind dazu ausgestaltet sind, untereinander interne Daten auszutauschen, und die erste Kommunikationseinheit weist eine Empfangseinheit auf, die zum Empfangen externer Daten von einer externen Computereinheit ausgestaltet ist. Gemäss diesem Aspekt der Erfindung weist die erste Kommunikationseinheit oder eine weitere Kommunikationseinheit eine Recheneinheit mit einem Algorithmus auf, wobei der Algorithmus dazu ausgestaltet ist, basierend auf den externen Daten Konfigurationsdaten als interne Daten zu generieren, und ist dazu ausgestaltet, die Konfigurationsdaten an mindestens eine andere Kommunikationseinheit des Systems zu übermitteln. Die erste Kommunikationseinheit oder eine weitere Kommunikationseinheit weist ausserdem eine digitale Anzeigevorrichtung zur visuellen Anzeige von Informationen für einen Benutzer auf, wobei die mindestens eine Anzeigevorrichtung dazu ausgestaltet ist, basierend auf den Konfigurationsdaten aktualisierte Informationen anzuzeigen. Mindestens eine der weiteren Kommunikationseinheiten weist eine Steuerungseinheit auf, die zur Steuerung des entsprechenden elektronischen Gerätes basierend auf den Konfigurationsdaten ausgestaltet ist, wobei die Steuerung ein Zuschalten oder Abschalten von Funktionen des Gerätes umfasst. Wenn nicht die erste Kommunikationseinheit die Recheneinheit mit dem Algorithmus aufweist, ist die erste Kommunikationseinheit dazu ausgestaltet, die empfangenen externen Daten an die Kommunikationseinheit zu übermitteln, die die Recheneinheit mit dem Algorithmus aufweist.

Gemäss einer Ausführungsform des Systems sind die Kommunikationseinheiten dazu ausgestaltet, die internen Daten mittels Nahfeldkommunikation untereinander auszutauschen, insbesondere wobei jede der Kommunikationseinheiten ein RFID-Modul aufweist.

Alternativ können die Kommunikationseinheiten dazu ausgestaltet sein, die internen Daten mittels einer Funkverbindung, beispielsweise Bluetooth oder Zigbee, untereinander auszutauschen.

Gemäss einer weiteren Ausführungsform ist die Empfangseinheit als eine Mobilfunk-Empfangseinheit zum Empfangen der externen Daten über ein Mobilfunknetz ausgestaltet.

Gemäss einer anderen Ausführungsform ist die Empfangseinheit als eine LPN-Empfangseinheit (LPN = Low Power Network) zum Empfangen der externen Daten über ein Niedrigenergienetzwerk, insbesondere LoRa oder SigFox, ausgestaltet.

Gemäss einer anderen Ausführungsform ist die Empfangseinheit dazu ausgestaltet, Anfragen der externen Computereinheit zu erfassen.

Gemäss einer weiteren Ausführungsform weisen die externen Daten einen oder mehrere Lizenzschlüssel für die mindestens zwei elektronischen Geräte auf.

Gemäss einer anderen Ausführungsform sind die externen Daten verschlüsselt, und die Recheneinheit weist einen Algorithmus auf, der dazu ausgestaltet ist, die externen Daten zu entschlüsseln.

Gemäss einer weiteren Ausführungsform weist eine der Kommunikationseinheiten sowohl die Empfangseinheit als auch die Recheneinheit auf.

Gemäss einer anderen Ausführungsform weist eine zweite Kommunikationseinheit die Recheneinheit auf und ist dazu ausgestaltet, die Aktualisierungsdaten mindestens an die erste Kommunikationseinheit zu übermitteln.

Gemäss einer weiteren Ausführungsform ist mindestens eine der Kommunikationseinheiten dazu ausgestaltet, in definierten Intervallen Nutzungsdaten mindestens eines Gerätes der Gruppe zu erfassen, insbesondere einer Vielzahl von Geräten bzw. allen Geräten der Gruppe.

In einer Ausführungsform weist die entsprechende Kommunikationseinheit dabei einen Algorithmus auf, der dazu ausgestaltet ist, aus den Nutzungsdaten ein Nutzungsprofil des Gerätes oder der Gruppe von Geräten zu erstellen und basierend auf dem Nutzungsprofil einem Benutzer einen Vorschlag für freischaltbare Funktionen für das mindestens eine Gerät auf einer Anzeigevorrichtung zu präsentieren. Alternativ kann der entsprechende Algorithmus auch extern auf einem Server bzw. in einer Cloud bereitgestellt sein, wobei die Kommunikationseinheit dem Algorithmus die Nutzungsdaten bereitstellt. Im Gegenzug kann die Kommunikationseinheit das Nutzungsprofil und/oder den Vorschlag für freischaltbare Funktionen erhalten, um letzteren einem Benutzer auf der Anzeigevorrichtung zu präsentieren.

Gemäss einer weiteren Ausführungsform umfassen die internen Daten Wartungsdaten mit Informationen über einen Wartungstermin mindestens eines Gerätes der Gruppe, und die Anzeigevorrichtung des mindestens einen Gerätes ist dazu ausgestaltet, den Wartungstermin anzuzeigen.

In einer Ausführungsform weist mindestens eine der Kommunikationseinheiten eine Statistikeinheit mit einem Algorithmus auf, der dazu ausgestaltet ist, den Wartungstermin mindestens eines Gerätes der Gruppe basierend auf Nutzungsdaten des mindestens einen Gerätes zu berechnen.

In einer anderen Ausführungsform ist mindestens eine der Kommunikationseinheiten zum Versenden von Nutzungsdaten des mindestens einen Gerätes an die externe Computereinheit ausgestaltet, die externen Daten Informationen über den Wartungstermin umfassen, und der Algorithmus der Recheneinheit ist dazu ausgestaltet, die Wartungsdaten basierend auf den externen Daten zu generieren.

Gemäss einer weiteren Ausführungsform weist mindestens eine der Kommunikationseinheiten einen Datenspeicher auf und ist dazu ausgestaltet, Informationen über Geräte der Gruppe zu erfassen oder abzurufen, erfasste oder abgerufene Informationen in dem Datenspeicher abzuspeichern, und die Informationen einem Benutzer auf der Anzeigevorrichtung anzuzeigen. Die Informationen über ein Gerät umfassen beispielsweise Informationen über einen Ort, freigeschaltete Funktionen und/oder einen Batteriestand des Gerätes.

Gemäss einer weiteren Ausführungsform ist mindestens eine der Kommunikationseinheiten dazu ausgestaltet, zu erfassen, an welche anderen Kommunikationseinheiten aktuelle Konfigurationsdaten bereits übermittelt wurden, und einem Benutzer auf der Anzeigevorrichtung anzuzeigen, an die Kommunikationseinheiten welcher Geräte die aktuellen Konfigurationsdaten noch zu übermitteln sind.

Gemäss einer weiteren Ausführungsform umfasst die Gruppe mindestens einen Schutzbehälter, der einen Innenraum aufweist, der zur Aufnahme für mindestens eines der elektronischen Geräte ausgestaltet ist. Der Schutzbehälter weist ebenfalls eine digitale Anzeigevorrichtung und eine Kommunikationseinheit auf. Dabei ist die Anzeigevorrichtung auf einer Aussenhülle des Schutzbehälters vorgesehen, und die Kommunikationseinheit des Schutzbehälters ist als eine Innenraum-Kommunikationseinheit zur Kommunikation mit Kommunikationseinheiten von im Innenraum befindlichen elektronischen Geräten ausgestaltet.

Ein zweiter Aspekt der vorliegenden Erfindung betrifft ein Verfahren zum Aktualisieren von Daten einer Gruppe von mindestens zwei zusammenwirkenden elektronischen Geräten, die eine Vielzahl von einzeln freischaltbaren Funktionen aufweisen, wobei die zusammenwirkenden elektronischen Geräte ein Laserstrahl-Projektionsgerät und mindestens ein zum Empfangen eines Laserstrahls des Laserstrahl-Projektionsgerätes ausgestaltetes Laserstrahl-Empfangsgerät aufweisen, wobei das Laserstrahl-Projektionsgerät und das mindestens eine Laserstrahl-Empfangsgerät dazu ausgestaltet sind, beim Bau von Gebäuden oder anderen Strukturen im Rahmen von Messaufgaben im Bereich der Bauinstallation zum Einsatz zu kommen, und dazu bestimmt sind, im Einsatz gemeinsam verwendet zu werden und operativ zusammenzuwirken. Eines der Geräte weist eine erste elektronische Kommunikationseinheit auf, das andere Gerät oder die anderen Geräte weisen jeweils eine weitere elektronische Kommunikationseinheit auf, und die Kommunikationseinheiten sind jeweils dazu ausgestaltet, untereinander interne Daten auszutauschen. Das Verfahren umfasst
- ein Empfangen von externen Daten von einer externen Computereinheit durch eine Empfangseinheit der ersten Kommunikationseinheit;
- ein Generieren, basierend auf den externen Daten, von Konfigurationsdaten als interne Daten durch einen Algorithmus einer Recheneinheit einer der Kommunikationseinheiten;
- ein Übermitteln der Konfigurationsdaten an mindestens eine andere der Kommunikationseinheiten;
- ein Anzeigen von basierend auf den Konfigurationsdaten aktualisierten Informationen auf einer Anzeigevorrichtung mindestens einer der Kommunikationseinheiten; und
- ein Steuern mindestens eines elektronischen Gerätes der Gruppe, das eine der weiteren Kommunikationseinheiten aufweist, durch die entsprechende weitere Kommunikationseinheit basierend auf den Konfigurationsdaten, wobei das Steuern ein Zuschalten oder Abschalten von Funktionen des Gerätes umfasst.

Wenn nicht die erste Kommunikationseinheit die Recheneinheit mit dem Algorithmus aufweist, werden die empfangenen externen Daten an die Kommunikationseinheit übermittelt, die die Recheneinheit mit dem Algorithmus aufweist.

Gemäss einer Ausführungsform umfasst das Verfahren ferner ein Entschlüsseln verschlüsselt übertragener externer Daten durch einen Algorithmus der Recheneinheit.

Das erfindungsgemässe System und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste beispielhafte Ausführungsform eines Datenverteilungssystems für eine Gruppe von Mietgeräten;
- Fig. 2: eine zweite beispielhafte Ausführungsform eines Datenverteilungssystems für eine Gruppe von Mietgeräten;
- Fig. 3a-b: beispielhafte Ausführungsformen einer ersten und einer zweiten Kommunikationseinheit;
- Fig. 4: eine dritte beispielhafte Ausführungsform eines Datenverteilungssystems für eine Gruppe von Mietgeräten;
- Fig. 5: eine vierte beispielhafte Ausführungsform eines Datenverteilungssystems für eine Gruppe von Mietgeräten;
- Fig. 6: ein Flussdiagramm zur Illustration einer ersten beispielhaften Ausführungsform eines Datenverteilungsverfahrens;
- Fig. 7: ein Flussdiagramm zur Illustration einer zweiten beispielhaften Ausführungsform eines Datenverteilungsverfahrens;
- Fig. 8: ein Flussdiagramm zur Illustration einer dritten beispielhaften Ausführungsform eines Datenverteilungsverfahrens; und
- Fig. 9: illustriert anhand eines Anwendungsbeispiels einen serverseitigen Anteil einer beispielhaften Ausführungsform eines Datenverteilungsverfahrens.

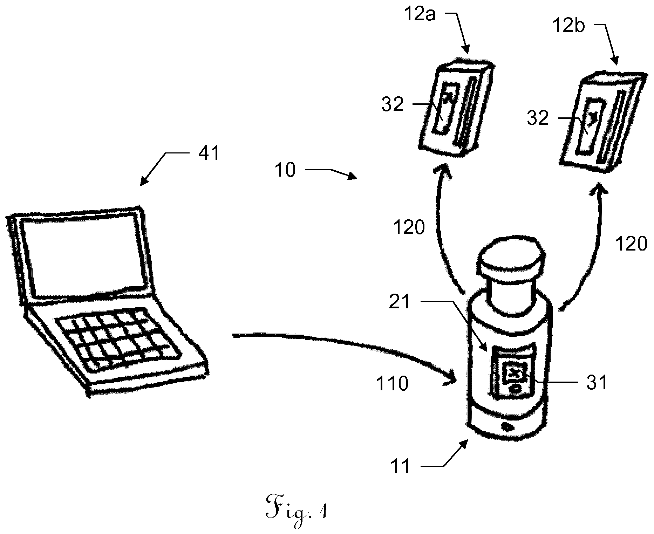

Figur 1 zeigt eine erste beispielhafte Ausführungsform eines Datenverteilungssystems für eine Gruppe 10 von elektronischen Geräten. Diese umfassen in dem dargestellten Beispiel ein im Konstruktionswesen eingesetztes Laserstrahl-Projektionsgerät 11, sowie zwei gleiche mit diesem zusammenwirkende Laserstrahl-Empfangsgeräte 12a, 12b.

Jedes der Geräte 11, 12a, 12b weist eine Anzeigeeinheit 31, 32 auf, die beispielsweise als LCD-Display, Touchscreen oder E-Papier ausgestaltet sein kann. Verschiedene Produktinformationen sind auf diesen Anzeigen darstellbar. Dies umfasst unter anderem eine Produktbezeichnung, Serien-, Kunden- oder, Mietvertragsnummer, Rückgabedatum und -ort, sowie gewählte, d. h. freigeschaltete, Funktionen des Gerätes. Dieses Merkmal verringert Irrtümer z. B. bei der Aus- oder Rückgabe von Mietgeräten oder der korrekten Konfiguration der Geräte gemäss den Kundenwünschen.

Von einem Computer 41 werden Daten an die Gruppe übermittelt, die auf jedem der Geräte der Gruppe angezeigt werden sollen.

Erfindungsgemäss werden diese Daten nicht an jedes einzelne Gerät übermittelt. Wie in Figur 1 dargestellt, weist ein erstes Gerät, hier das Projektionsgerät 11, eine erste Kommunikationseinheit 21 auf mit einer Anzeigeeinheit 31. Die Daten werden von dem Computer 41 nur an diese erste Kommunikationseinheit 21 übertragen (Pfeil 110). Von der ersten Kommunikationseinheit 21 werden die Daten überarbeitet, beispielsweise entschlüsselt und mit bereits gespeicherten Daten abgeglichen. Anschliessend werden sie auf der Anzeigeeinheit 31 angezeigt und dann an die anderen Geräte 12a,b weitergeleitet (Pfeil 120), z. B. mittels Funk oder Nahfeldkommunikation, wo sie dann auf deren Anzeigeeinheiten 32 ebenfalls angezeigt werden.

In der Praxis funktioniert die Datenverteilung gemäss Figur 1 beispielsweise folgendermassen: Ein Mieter der dargestellten Gerätegruppe 10 aus Laserstrahl-Projektionsgerät 11 und zwei Empfangsgeräten 12a, 12b erwirbt neue Funktionen (Lizenzen) für die gemieteten Geräte mittels einer auf seinem PC 41 installierten Software. Die Software lädt die entsprechenden Lizenzen über das Internet auf den PC 41 und überträgt sie dann an die Kommunikationseinheit 21 des Laserstrahl-Projektionsgerätes 11 - beispielsweise mittels WLAN oder Bluetooth und vorzugsweise verschlüsselt. Sobald die Kommunikationseinheit 21 die Daten erhält, werden diese entschlüsselt und ausgewertet, und die gewünschten Funktionen des Laserstrahl-Projektionsgerätes 11 werden freigeschaltet. Sobald eines der Empfangsgeräte 12a sich mit dem Projektionsgerät 11 verbindet, prüft dessen Kommunikationseinheit 21 die in der Kommunikationseinheit dieses Empfangsgerätes 12a hinterlegte Konfiguration und aktualisiert diese. Auf der Anzeigeeinheit 32 werden dann entsprechend der neuen Konfiguration aktualisierte Daten angezeigt.

Diese Datenverteilung findet jedes Mal statt, wenn die Konfiguration geändert werden soll. Dadurch werden die dargestellten Informationen dynamisch aktuell gehalten und ändern sich, sobald Funktionen aktiviert oder deaktiviert werden. Die aktualisierten Informationen können neben den Funktionen auch statische Informationen wie eine Produktbezeichnung oder eine Seriennummer umfassen, sowie miet-vertragsrelevante Daten (z. B. vereinbarten Rückgabeort und -datum oder den Mieternamen), gruppenbezogene Daten (z. B. die Bezeichnungen oder Seriennummern der zusammen vermieteten Geräte) oder wartungsrelevante Daten (z. B. den nächsten Wartungstermin oder einen Batteriestand).

Alle oder ein Teil dieser Informationen werden in der entsprechenden Gruppe 10 von Geräten verteilt, sodass auf allen Geräten einheitliche Daten angezeigt werden können.

Alternativ können die Daten auch nur auf einzelnen Geräten der Gruppe anzeigbar sein. Auch kann die Gruppe 10 ein spezielles Ein- und Ausgabegerät aufweisen, dass dazu ausgestaltet ist, von einem Benutzer gehalten oder getragen zu werden, und eine Kommunikationseinheit mit Anzeigeeinheit aufweist, sowie Eingabemittel für den Benutzer, wie ein Tastenfeld oder eine als Touchscreen ausgebildete Anzeigeeinheit. Ein solches Gerät kann insbesondere als Wearable ausgestaltet sein, z. B. als eine Smartwatch, VR-Brille oder ein E-Kleidungsstück, oder als ein Smartphone oder handhaltbarer Entfernungsmesser.

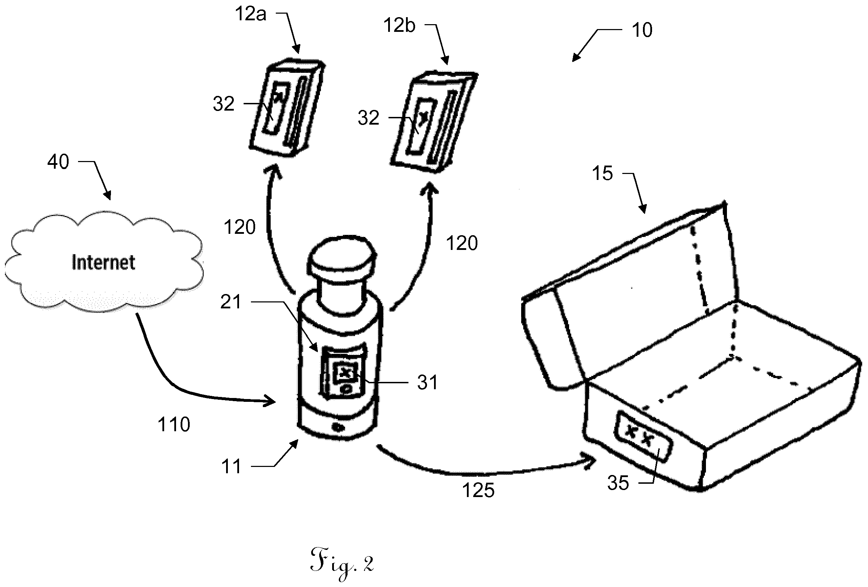

Figur 2 zeigt eine zweite beispielhafte Ausführungsform des Datenverteilungssystems. Dabei werden die externen Daten aus dem Internet an die Kommunikationseinheit 21 übertragen 110, beispielsweise über ein WLAN-Netzwerk oder ein Mobilfunknetz, und wie in Figur 1 beschrieben an die anderen Geräte 12a,b weitergeleitet 120.

Die Geräte-Gruppe 10 umfasst hier zusätzlich einen Schutzbehälter 15. Verschiedene auch hier mögliche Ausgestaltungen eines solchen Schutzbehälters sind beispielsweise in der Europäischen Patentanmeldung 15196101.8 beschrieben. Der Schutzbehälter weist eine Anzeigeeinheit 35 auf seiner Aussenhülle auf. Die erste Kommunikationseinheit 21 kann die Daten an den Schutzbehälter 15 zur Anzeige auf dieser Anzeigeeinheit 35 übertragen 125. Dies kann beispielsweise mittels Nahfeldkommunikation geschehen, wenn sich das Projektionsgerät 11 in dem Schutzbehälter 15 befindet. Auch können weitere Daten von in dem Schutzbehälter 15 befindlichen Geräten an diesen übertragen werden und so einem Benutzer auch bei geschlossenem Behälter 15 auf der Anzeigeeinheit 35 anzeigbar sein.

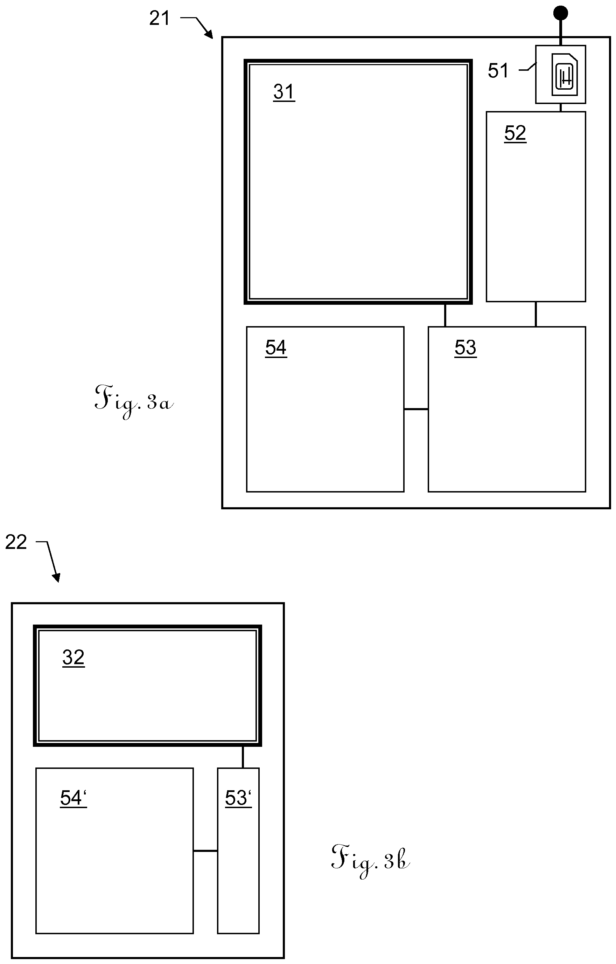

Die Figuren 3a und 3b zeigen rein beispielhaft und schematisch zwei zusammenwirkende Kommunikationseinheiten 21,22. Dabei zeigt Figur 3a eine erste Kommunikationseinheit 21 des ersten Geräts 11 aus den Figuren 1 und 2. Diese weist eine Anzeigeeinheit 31 auf, die beispielsweise als LCD-Display, Touchscreen oder E-Ink-Display ausgestaltet sein kann und zur Anzeige von Daten an einen Benutzer des Geräts ausgestaltet ist. Die Einheit 21 weist ausserdem eine Empfangseinheit 51 auf zum Empfang externer Daten. Hier ist die Empfangseinheit 51 als eine Mobilfunk-Empfangseinheit ausgestaltet mit einer SIM-Karte zum Empfang der Daten über ein Mobilfunknetz. Die so empfangenen Daten werden an eine Recheneinheit 52 weitergeleitet, in der die externen Daten in interne Daten umgewandelt werden. Dazu weist die Recheneinheit 52 eine Schaltung und einen Algorithmus auf, die dazu ausgestaltet sind, basierend auf den externen Daten Konfigurationsdaten als interne Daten zu generieren, wozu beispielsweise die externen Daten entschlüsselt, dekomprimiert, umformatiert und/oder mit lokal gespeicherten Daten abgeglichen und zusammengeführt werden. In einer Speichereinheit 53 der Kommunikationseinheit 21, beispielsweise einem Speicherbaustein oder einem Halbleiterlaufwerk, sind sowohl lokale Daten, als auch die externen und umgewandelten Daten speicherbar.

Gemäss dieser Ausführungsform weist die Kommunikationseinheit 21 eine Nahfeldkommunikationsvorrichtung 54 auf, die zum Austausch von Daten mit entsprechenden Vorrichtungen anderer Kommunikationseinheiten ausgestaltet ist. Insbesondere können auf diese Weise die Konfigurationsdaten an andere Kommunikationseinheiten übermittelt werden.

Figur 3b zeigt eine solche zweite Kommunikationseinheit 22. Diese weist eine Nahfeldkommunikationsvorrichtung 54' auf, ausgestaltet zum Empfangen von Daten der entsprechenden Vorrichtung 54 der Kommunikationseinheit 21 aus Figur 3a, sowie eine Anzeigeeinheit 32 zum Darstellen von Informationen auf Basis der empfangenen Daten.

Im Gegensatz zur ersten, in Figur 3a gezeigten, Kommunikationseinheit 21 weist die hier dargestellte weder eine Empfangseinheit noch eine Recheneinheit auf. Auch die Speichereinheit 53' kann hier kleiner ausgeführt sein, weshalb diese Kommunikationseinheit 22 deutlich kleiner dimensioniert ist und auch auf bzw. in entsprechend kleineren Geräten Platz findet.

Alternativ können auch Kommunikationsvorrichtungen vorgesehen sein, die zum Austausch von Daten mittels Funk ausgestaltet sind, beispielsweise mittels Zigbee, Z-Wave oder Bluetooth.

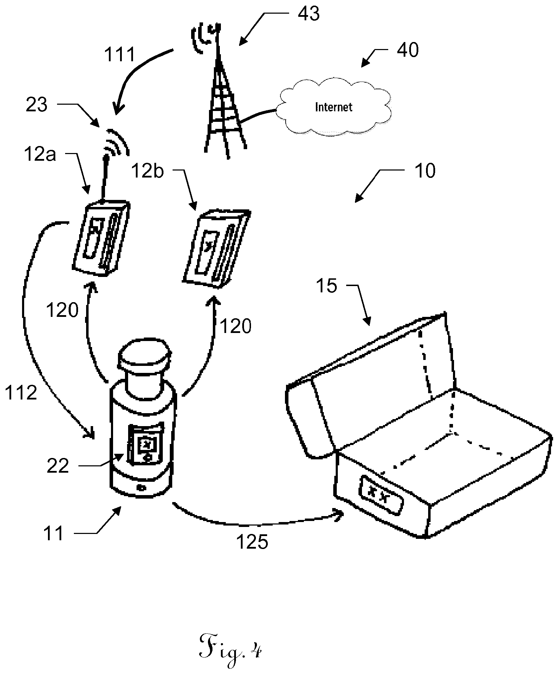

Figur 4 zeigt eine dritte beispielhafte Ausführungsform des Datenverteilungssystems. Dabei werden die externen Daten über das Internet 40 über ein Mobilfunknetz (Mobilfunkanlage 43) übertragen (Pfeil 111), im Gegensatz zu den Ausführungsformen aus Figur 1 und Figur 2 aber nicht an das Projektionsgerät 11, sondern an das Laserstrahl-Empfangsgerät 12a, das über eine Kommunikationseinheit 23 mit Mobilfunk-Empfangseinheit verfügt. Diese Kommunikationseinheit 23 verfügt in diesem Beispiel aber nicht über eine Recheneinheit, diese ist statt dessen in der Kommunikationseinheit 22 des Projektionsgerätes 11 vorgesehen. Die unverarbeiteten Daten werden daher zunächst an diese Kommunikationseinheit 22 weitergeleitet (Pfeil 112). Dort werden die Daten überarbeitet und wie in Figur 1 und 2 beschrieben an die anderen Geräte 12a,b und den Schutzbehälter 15 weitergeleitet (Pfeile 120, 125).

In der Praxis funktioniert die Datenverteilung gemäss Figur 4 beispielsweise folgendermassen: Ein Mieter der dargestellten Gerätegruppe 10 aus Laserstrahl-Projektionsgerät 11, zwei Empfangsgeräten 12a, 12b und Schutzbehälter 15 erwirbt neue Funktionen (Lizenzen) für die gemieteten Geräte über ein Interface der Kommunikationseinheit eines der Geräte, hier dem Empfangsgerät 12a. Die Kommunikationseinheit 23 dieser Kommunikationseinheit lädt die entsprechenden Lizenzen über eine Mobilfunkverbindung und das Internet auf das Empfangsgerät 12a und überträgt sie dann an die Kommunikationseinheit 21 des Laserstrahl-Projektionsgerätes 11 - beispielsweise mittels Funk oder Nahfeldkommunikation. Sobald die Kommunikationseinheit 21 die Daten erhält, werden diese entschlüsselt und ausgewertet, und die gewünschten Funktionen des Laserstrahl-Projektionsgerätes 11 werden freigeschaltet. Sobald eines der Empfangsgeräte 12a, 12b sich mit dem Projektionsgerät 11 verbindet (Empfangsgerät 12a ist in der Regel noch verbunden), prüft dessen Kommunikationseinheit 21 die in der Kommunikationseinheit dieses Empfangsgerätes 12a hinterlegte Konfiguration und aktualisiert diese. Auf der Anzeigeeinheit 32 werden dann entsprechend der neuen Konfiguration aktualisierte Daten angezeigt.

Wenn der Schutzbehälter 15 mit dem Projektionsgerät 11, bzw. deren Kommunikationseinheiten, miteinander verbunden werden, wird auch hier die hinterlegte Konfiguration geprüft und aktualisiert. Auch die Anzeigeeinheit 35 des Schutzbehälters 15 zeigt dann die aktualisierten Daten an. Die Verbindung des Projektionsgerätes 11 mit dem Schutzbehälter 15 kann sowohl manuell als auch automatisch erfolgen.

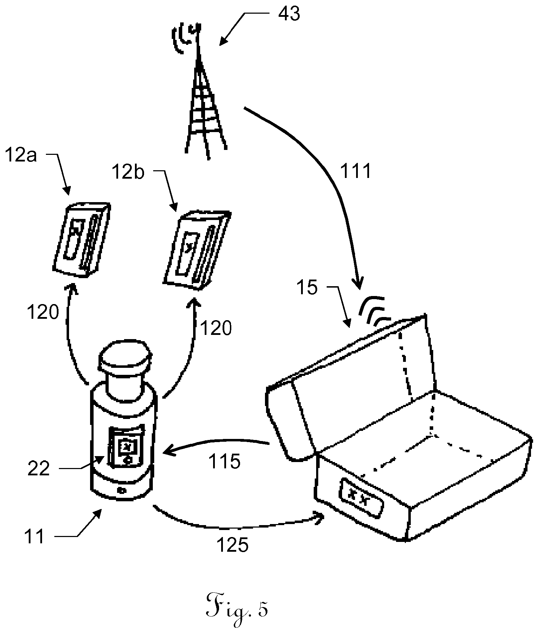

Figur 5 zeigt eine vierte beispielhafte Ausführungsform des Datenverteilungssystems. Wie in Figur 4 gezeigt werden die externen Daten über das Internet und ein Mobilfunknetz (Mobilfunkanlage 43) übertragen (Pfeil 111), im Gegensatz zu der Ausführungsformen aus Figur 4 aber nicht an das Laserstrahl-Empfangsgerät 12a, sondern an den Schutzbehälter 15 der über eine Kommunikationseinheit mit Mobilfunk-Empfangseinheit verfügt. Die unverarbeiteten Daten werden auch hier an die Kommunikationseinheit 22 des Projektionsgerätes 11 weitergeleitet (Pfeil 115), dort verarbeitet und dann an die anderen Geräte 12a,b und den Schutzbehälter 15 weitergeleitet (Pfeile 120, 125).

Alternativ kann natürlich auch der Schutzbehälter 15 eine Kommunikationseinheit mit den in Figur 3a gezeigten Funktionen aufweisen.

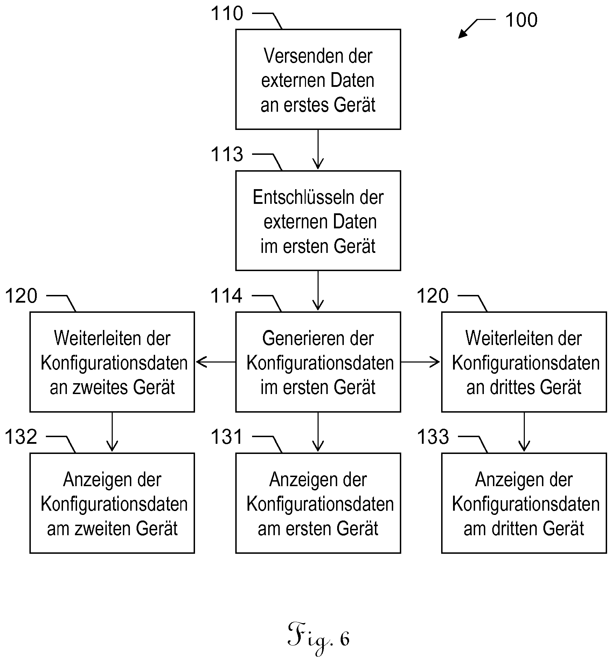

In den Figuren 6 bis 8 werden anhand von Flussdiagrammen verschiedene beispielhafte Ausgestaltungen eines erfindungsgemässen Verfahrens illustriert.

Figur 6 zeigt eine erste beispielhafte Ausführungsform des Verfahrens. Dieses Verfahren 100 wird insbesondere dadurch gestartet, dass ein Benutzer einer Gruppe von Geräten eine Funktion ausführt, die eine Aktualisierung von Daten auf den Geräten erforderlich macht. Dazu kann er beispielsweise für eine Gruppe von gemieteten Geräten neue Funktionen freischalten - entweder mittels einer Software auf einem PC oder direkt an einem der Geräte. Dies führt zum ersten Schritt 110 des Verfahrens, in welchem die zur Aktualisierung nötigen Daten an die Kommunikationseinheit eines ersten Gerätes übermittelt werden. Diese Daten können beispielsweise Lizenzschlüssel umfassen, um die Funktionen in den Geräten freizuschalten. Die Daten werden übertragen, sobald die Kommunikationseinheit empfangsbereit ist.

Da die Daten vorzugsweise verschlüsselt versendet werden, erfolgt im nächsten Schritt 113 das notwendige Entschlüsseln der externen Daten in der Kommunikationseinheit. Im Anschluss werden im nächsten Schritt 114 die externen Daten in der Kommunikationseinheit soweit nötig umgewandelt in interne Konfigurationsdaten, die von den Geräten auswertbar sind.

Die Konfigurationsdaten können dann beispielsweise direkt dazu verwendet werden, um die gewünschten Funktionen im ersten Gerät freizuschalten. Ausserdem werden die Konfigurationsdaten bzw. auf diesen basierende Informationen in Schritt 131 auf einer Anzeigeeinheit der Kommunikationseinheit angezeigt.

Sobald die Kommunikationseinheit des ersten Geräts eine Verbindung mit den Kommunikationseinheiten weiterer Geräte der Gruppe aufnimmt, werden die Konfigurationsdaten in Schritt 120 an die jeweiligen Kommunikationseinheiten übermittelt. Dazu kann insbesondere Nahfeldkommunikation eingesetzt werden, wobei die Kommunikationseinheiten jeweils ein RFID-Modul aufweisen.

Sobald eine weitere Kommunikationseinheit die Konfigurationsdaten erhalten hat, werden diese bzw. auf diesen basierende Informationen in Schritt 131, 132 auf einer Anzeigeeinheit der jeweiligen Kommunikationseinheit angezeigt. Beispielsweise werden sie ausserdem dazu verwendet, die gewünschten Funktionen auch in den weiteren Geräten freizuschalten.

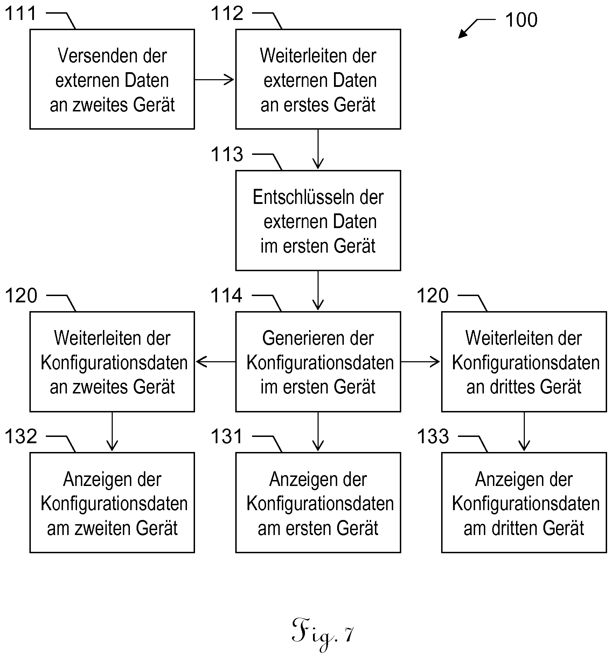

Figur 7 zeigt eine zweite beispielhafte Ausführungsform des Verfahrens. Im Gegensatz zu dem in Figur 6 gezeigten werden in diesem Verfahren 100 in Schritt 111 die externen Daten nicht an das erste Gerät versendet, sondern an ein zweites. Von diesem werden die Daten in Schritt 112 an das erste weitergeleitet, wo sie wie in Figur 6 beschrieben entschlüsselt (Schritt 113) und zur Generierung der Konfigurationsdaten verwendet werden (Schritt 114). Von dem ersten Gerät werden die Konfigurationsdaten dann unter anderem auch wieder an das zweite Gerät übertragen (Schritt 120) .

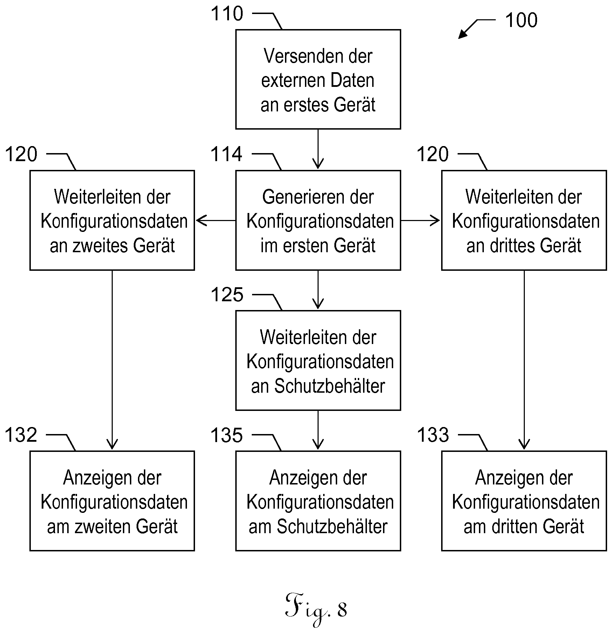

Figur 8 zeigt eine dritte beispielhafte Ausführungsform des Verfahrens. Im Gegensatz zu dem in Figur 6 gezeigten ist hier das erste Gerät in einem Schutzbehälter befindlich. In Schritt 110 werden die zur Aktualisierung nötigen Daten an die Kommunikationseinheit des ersten Gerätes übermittelt, wo in Schritt 114 die Konfigurationsdaten generiert werden.

Da das erste Gerät sich im Schutzbehälter befindet, können auf den Konfigurationsdaten basierende Informationen zwar auf dem Gerät selbst angezeigt werden, sind für den Benutzer aber erst nach Öffnen des Behälters sichtbar. Vorteilhaft werden die Konfigurationsdaten daher im nächsten Schritt 125 an eine Kommunikationseinheit des Schutzbehälters übermittelt, insbesondere mittels Nahfeldkommunikation, sodass die Informationen in Schritt 135 auf einer Anzeigeeinheit des Schutzbehälters angezeigt werden. An die weiteren Geräte werden die Konfigurationsdaten in Schritt 120 ebenfalls übermittelt. Sofern sie sich ausserhalb des Schutzbehälters befinden, können die Daten über eine externe Kommunikationseinheit des Schutzbehälters übertragen werden, und dann auf dem zweiten und dritten Gerät angezeigt werden (Schritte 132, 133). Sofern sich die anderen Geräte ebenfalls im Schutzbehälter befinden, können die Daten auch direkt mittels Nahfeldkommunikation von der Kommunikationseinheit des ersten Gerätes übertragen werden. Zusätzlich oder alternativ zur Anzeige auf den Geräten, die im Innern des Behälters für den Benutzer nicht sichtbar ist, können die Daten zur Anzeige auf der Anzeigeeinheit des Schutzbehälters an diesen übertragen werden.

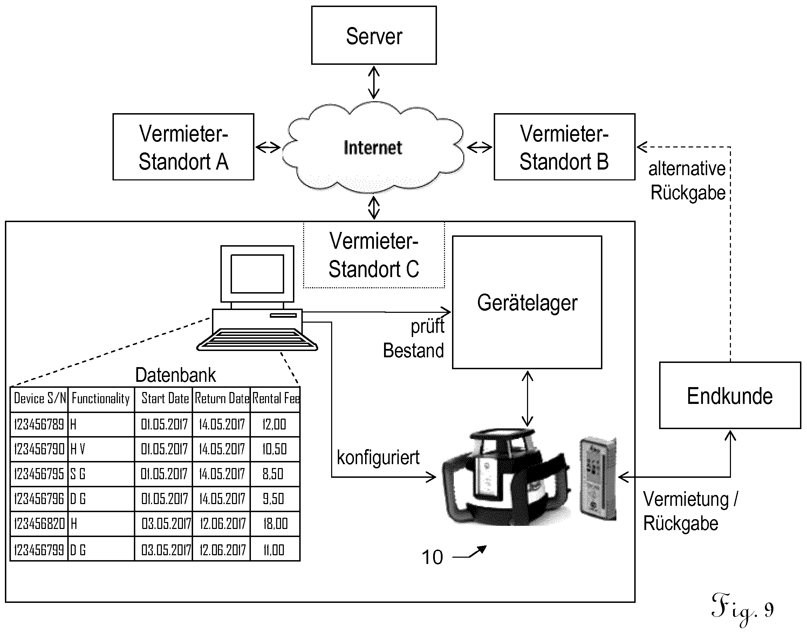

Figur 9 illustriert schematisch ein Anwendungsbeispiel für eine Ausführungsform des erfindungsgemässen Verfahrens und Systems. Gezeigt ist die Infrastruktur eines Vermieters mit mehreren Standorten A, B und C. Jeder der Standorte ist über das Internet mit einem Server verbunden und kann auf dessen Daten zugreifen. Dieser kann entweder ein Server des Vermieters selbst sein oder beispielsweise dem Hersteller oder Vertreiber der zu vermietenden Geräte gehören.

Am Standort C des Vermieters mietet ein Endkunde eine Gruppe 10 von Geräten, die im Lager des Standorts C vorhanden sind, und bestellt eine bestimmte Konfiguration. Dies wird in eine Datenbank eines örtlichen Personal Computers eingetragen, woraufhin die den gemieteten Geräten und der bestellten Konfiguration entsprechenden Lizenzschlüssel über das Internet vom Server abgerufen werden. Anschliessend werden die Geräte der Gruppe 10 konfiguriert, d. h. die Lizenzschlüssel und eventuell weitere Konfigurationsdaten werden an die Geräte übertragen. Dies erfolgt, wie oben beschrieben, vorzugsweise durch Übertragung der Daten an die Kommunikationseinheit eines Hauptgerätes.

Die weiteren Konfigurationsdaten umfassen insbesondere mietvertragsrelevante Daten, also beispielsweise zu Mieter, Vermieter, Mietdauer und gemieteter Gerätegruppe 10 (z. B. Anzahl und Identität aller Geräte der Gruppe).

Die Geräte zeigen bei Übergabe an den Kunden bereits den Konfigurationsdaten entsprechende Informationen an, sodass die Gefahr von Irrtümern deutlich reduziert wird.

Der Kunde übernimmt die Geräte und nutzt sie vertragsgemäss. Wie weiter oben beschrieben, können die Konfigurationsdaten dabei auch vor Ort (z. B. über eine Mobilfunkverbindung) aktualisiert werden, beispielsweise wenn weitere Funktionen der Geräte freigeschaltet oder die Mietvertragsdauer verlängert werden sollen.

Die Rückgabe erfolgt wieder an Standort C oder an einem anderen Standort des Vermieters. Durch die auf den Geräten angezeigten Informationen ist auch bei der Rückgabe die Gefahr von Irrtümern deutlich reduziert.

Um das mögliche Problem zu lösen, dass ein Anwender der Gerätegruppe bestimmte Funktionalitäten der Geräte nicht kennt, obwohl diese vorhanden sind oder freigeschaltet werden könnten, ist in einer Ausführungsform des Systems mindestens eine der Kommunikationseinheiten der Gruppe dazu ausgestaltet, Nutzungsdaten mindestens eines Gerätes der Gruppe zu erfassen. Diese können beispielsweise Beschleunigungs- oder Lokalisierungsdaten der Geräte umfassen, sowie Nutzungszeiten und verwendete Funktionalitäten.

Die entsprechende Kommunikationseinheit weist ausserdem einen Algorithmus auf, der dazu ausgestaltet ist, basierend auf erfassten Nutzungsdaten ein Nutzungsprofil zu erstellen und darauf basierend dem Anwender automatisch für diesen passende Funktionen vorschlägt, wobei diese dann vom Anwender direkt aktiviert werden können. Ein Vorschlag für freischaltbare Funktionen kann dabei insbesondere auf einer der Anzeigevorrichtungen präsentiert werden. Dies ermöglicht eine Zeitersparnis und verhindert ein unnötiges Austauschen von Geräten.

Weiterhin kann der Algorithmus so ausgelegt sein, herauszufinden, ob ein Gerät der Gruppe eine bestimmte Funktionalität bereits aufweist oder diese unterstützt. Benötigt der Anwender auf einer Baustelle eine bestimmte Funktionalität, die ein ihm zur Verfügung stehendes Gerät nicht bereitstellt, kann mittels dieses Algorithmus auf der Anzeigeeinheit ein Standort eines anderen die Funktion bereitstellenden Gerätes auf derselben Baustelle dargestellt werden. So hat der Anwender zum Beispiel ein älteres Gerät welches eine gewisse neue Funktion nicht unterstützt. Der Anwender kann dann auf der Baustelle mögliche Funktionen anderer Geräte identifizieren (z. B. mit Hilfe einer Karte auf der Anzeige), wo ein Gerät mit den passenden Funktionen ist, welche beim Gerät, das der Anwender zur Verfügung hat (d. h. insbesondere gerade in der Hand hält), bzw. der zugehörigen Gerätegruppe, nicht verfügbar sind. Beispielsweise kann er dann automatisch eine Reservation des benötigten Gerätes, bzw. der Gerätegruppe, vornehmen.

Alternativ kann dieser Algorithmus ganz oder teilweise extern, insbesondere auf einem Server oder in einer Cloud, vorgesehen sein, wobei die Daten mittels der Empfangseinheit beispielsweise über das Internet übertragen werden.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. System zum Verteilen von Daten in einer Gruppe (10) von zusammenwirkenden elektronischen Geräten, die eine Vielzahl von einzeln freischaltbaren Funktionen aufweisen, wobei die zusammenwirkenden elektronischen Geräte mindestens ein Laserstrahl-Projektionsgerät (11) und mindestens ein zum Empfangen eines Laserstrahls des Laserstrahl-Projektionsgerätes (11) ausgestaltetes Laserstrahl-Empfangsgerät (12a,b) aufweisen, wobei
- das Laserstrahl-Projektionsgerät (11) und das mindestens eine Laserstrahl-Empfangsgerät (12a,b) dazu ausgestaltet sind, beim Bau von Gebäuden oder anderen Strukturen im Rahmen von Messaufgaben im Bereich der Bauinstallation zum Einsatz zu kommen, und dazu bestimmt sind, im Einsatz gemeinsam verwendet zu werden und operativ zusammenzuwirken;
- eines der Geräte eine erste elektronische Kommunikationseinheit (21, 23) aufweist;
- das andere Gerät oder die anderen Geräte jeweils eine weitere Kommunikationseinheit (22) aufweisen;
- die Kommunikationseinheiten (22) dazu ausgestaltet sind, untereinander interne Daten auszutauschen; und
- die erste Kommunikationseinheit (21, 23) eine Empfangseinheit (51) aufweist, die zum Empfangen externer Daten von einer externen Computereinheit (41) ausgestaltet ist,
**dadurch gekennzeichnet, dass**
- die erste Kommunikationseinheit (21, 23) oder eine weitere Kommunikationseinheit (22) eine Recheneinheit (52) mit einem Algorithmus aufweist, wobei der Algorithmus dazu ausgestaltet ist, basierend auf den externen Daten Konfigurationsdaten als interne Daten zu generieren, und dazu ausgestaltet ist, die Konfigurationsdaten an mindestens eine andere Kommunikationseinheit des Systems zu übermitteln;
- die erste Kommunikationseinheit (21, 23) oder eine weitere Kommunikationseinheit (22) eine digitale Anzeigevorrichtung (31, 32) zur visuellen Anzeige von Informationen für einen Benutzer aufweist, wobei die Anzeigevorrichtung (31, 32) dazu ausgestaltet ist, basierend auf den Konfigurationsdaten aktualisierte Informationen anzuzeigen; und
- mindestens eine der weiteren
Kommunikationseinheiten (22) eine Steuerungseinheit aufweist, die zur Steuerung des entsprechenden elektronischen Gerätes (11, 12a,b) basierend auf den Konfigurationsdaten ausgestaltet ist, wobei die Steuerung ein Zuschalten oder Abschalten von Funktionen des Gerätes (11, 12a,b) umfasst,
wobei, wenn nicht die erste Kommunikationseinheit (21, 23) die Recheneinheit (52) mit dem Algorithmus aufweist, die erste Kommunikationseinheit (21, 23) dazu ausgestaltet ist, die empfangenen externen Daten an die Kommunikationseinheit (22) zu übermitteln, die die Recheneinheit (52) mit dem Algorithmus aufweist.

2. System nach Anspruch 1,
**dadurch gekennzeichnet, dass**
die Kommunikationseinheiten (21, 22, 23) dazu ausgestaltet sind, die internen Daten mittels Nahfeldkommunikation untereinander auszutauschen, insbesondere wobei jede der Kommunikationseinheiten (21, 22, 23) ein RFID-Modul aufweist.

3. System nach Anspruch 1 oder Anspruch 2,
**dadurch gekennzeichnet, dass**
die Empfangseinheit (51)
- als eine Mobilfunk-Empfangseinheit zum Empfangen der externen Daten über ein Mobilfunknetz ausgestaltet ist; und/oder
- als eine LPN-Empfangseinheit zum Empfangen der externen Daten über ein Niedrigenergienetzwerk, insbesondere LoRa oder SigFox, ausgestaltet ist,
insbesondere wobei die Empfangseinheit (51) dazu ausgestaltet ist, Anfragen der externen Computereinheit (41) zu erfassen.

4. System nach einem der vorangehenden Ansprüche,
**dadurch gekennzeichnet, dass**
die externen Daten lizenzbezogene Daten, insbesondere Lizenzschlüssel, für die mindestens zwei elektronischen Geräte (11, 12a,b) aufweisen.

5. System nach einem der vorangehenden Ansprüche,
**dadurch gekennzeichnet, dass**
die externen Daten verschlüsselt sind, und die Recheneinheit (52) einen Algorithmus aufweist, der dazu ausgestaltet ist, die externen Daten zu entschlüsseln.

6. System nach einem der vorangehenden Ansprüche,
**dadurch gekennzeichnet, dass**
die erste Kommunikationseinheit (21, 23) sowohl die Empfangseinheit (51) als auch die Recheneinheit (52) aufweist.

7. System nach einem der Ansprüche 1 bis 5,
**dadurch gekennzeichnet, dass**
eine zweite Kommunikationseinheit (22) die Recheneinheit (52) aufweist und dazu ausgestaltet ist, die Konfigurationsdaten mindestens an die erste Kommunikationseinheit (21, 23) zu übermitteln.

8. System nach einem der Ansprüche 1 bis 5,
**dadurch gekennzeichnet, dass**
ein erstes Laserstrahl-Empfangsgerät (12a) die erste Kommunikationseinheit (23) aufweist, und das Laserstrahl-Projektionsgerät (11) eine zweite Kommunikationseinheit (22) aufweist, wobei die zweite Kommunikationseinheit (22) die Recheneinheit (52) aufweist und dazu ausgestaltet ist, die Konfigurationsdaten mindestens an die erste Kommunikationseinheit (23) zu übermitteln.

9. System nach einem der vorangehenden Ansprüche,
**dadurch gekennzeichnet, dass**
mindestens eine der Kommunikationseinheiten (21, 22, 23) dazu ausgestaltet ist, in definierten Intervallen Nutzungsdaten mindestens eines Gerätes (11, 12a,b) der Gruppe (10) zu erfassen, insbesondere wobei die entsprechende Kommunikationseinheit einen Algorithmus aufweist, der dazu ausgestaltet ist, ein Nutzungsprofil zu erstellen und basierend auf dem Nutzungsprofil einem Benutzer einen Vorschlag für freischaltbare Funktionen für das mindestens eine Gerät (11, 12a,b) auf einer Anzeigevorrichtung (31, 32) zu präsentieren.

10. System nach Anspruch 9,
**dadurch gekennzeichnet, dass**
- die internen Daten Wartungsdaten mit Informationen über einen Wartungstermin mindestens eines Gerätes (11, 12a,b) der Gruppe (10) umfassen, und
- die Anzeigevorrichtung (31, 32) des mindestens einen Gerätes (11, 12a,b) dazu ausgestaltet ist, den Wartungstermin anzuzeigen,
wobei mindestens eine der Kommunikationseinheiten (21, 22, 23)
- eine Statistikeinheit mit einem Algorithmus aufweist, der dazu ausgestaltet ist, den Wartungstermin mindestens eines Gerätes (11, 12a,b) der Gruppe (10) basierend auf den Nutzungsdaten des mindestens einen Gerätes (11, 12a,b) zu berechnen; oder
- zum Versenden der Nutzungsdaten des mindestens einen Gerätes (11, 12a,b) an die externe Computereinheit (41) ausgestaltet ist, die externen Daten Informationen über den Wartungstermin umfassen, und der Algorithmus der Recheneinheit (52) dazu ausgestaltet ist, die Wartungsdaten basierend auf den externen Daten zu generieren.

11. System nach einem der vorangehenden Ansprüche,
**dadurch gekennzeichnet, dass**
mindestens eine der Kommunikationseinheiten (21, 22, 23) einen Datenspeicher (53) aufweist und dazu ausgestaltet ist,
- Informationen über Geräte (11, 12a,b) der Gruppe (10) zu erfassen oder abzurufen,
- erfasste oder abgerufene Informationen in dem Datenspeicher (53) abzuspeichern, und
- die Informationen einem Benutzer auf der Anzeigevorrichtung (31, 32) anzuzeigen,
insbesondere wobei die Informationen über ein Gerät (11, 12a,b) Informationen über einen Ort des Gerätes (11, 12a,b) und freigeschaltete Funktionen des Gerätes (11, 12a,b) umfassen.

12. System nach einem der vorangehenden Ansprüche,
**dadurch gekennzeichnet, dass**
mindestens eine der Kommunikationseinheiten (21, 22, 23) dazu ausgestaltet ist,
- zu erfassen, an welche anderen Kommunikationseinheiten (21, 22, 23) aktuelle Konfigurationsdaten bereits übermittelt wurden; und
- einem Benutzer auf der Anzeigevorrichtung (31, 32) anzuzeigen, an die Kommunikationseinheiten (21, 22, 23) welcher Geräte (11, 12a,b) die aktuellen Konfigurationsdaten noch zu übermitteln sind.

13. System nach einem der vorangehenden Ansprüche,
**dadurch gekennzeichnet, dass**
die Gruppe (10) mindestens einen Schutzbehälter (15) umfasst, der einen Innenraum aufweist, der zur Aufnahme für mindestens eines der elektronischen Geräte (11, 12a,b) ausgestaltet ist, wobei
- eine digitale Anzeigevorrichtung (35) auf einer Aussenhülle des Schutzbehälters (15) vorgesehen ist; und
- eine Kommunikationseinheit des Schutzbehälters (15) als eine Innenraum-Kommunikationseinheit zur Kommunikation mit Kommunikationseinheiten (21, 22, 23) von im Innenraum befindlichen elektronischen Geräten (11, 12a,b) ausgestaltet ist.

14. Verfahren (100) zum Aktualisieren von Daten einer Gruppe (10) von mindestens zwei zusammenwirkenden elektronischen Geräten (11, 12), die eine Vielzahl von einzeln freischaltbaren Funktionen aufweisen, wobei die zusammenwirkenden elektronischen Geräte ein Laserstrahl-Projektionsgerät (11) und mindestens ein zum Empfangen eines Laserstrahls des Laserstrahl-Projektionsgerätes (11) ausgestaltetes Laserstrahl-Empfangsgerät (12a,b) aufweisen, wobei das Laserstrahl-Projektionsgerät (11) und das mindestens eine Laserstrahl-Empfangsgerät (12a,b) dazu ausgestaltet sind, beim Bau von Gebäuden oder anderen Strukturen im Rahmen von Messaufgaben im Bereich der Bauinstallation zum Einsatz zu kommen, und dazu bestimmt sind, im Einsatz gemeinsam verwendet zu werden und operativ zusammenzuwirken, wobei eines der Geräte eine erste elektronische Kommunikationseinheit (21, 23) aufweist, das andere Gerät oder die anderen Geräte jeweils eine weitere elektronische Kommunikationseinheit (22) aufweisen, und die Kommunikationseinheiten (22) dazu ausgestaltet sind, untereinander interne Daten auszutauschen, mit
- einem Empfangen von externen Daten von einer externen Computereinheit (41) durch eine Empfangseinheit (51) der ersten Kommunikationseinheit (21, 23);
- einem Generieren, basierend auf den externen Daten, von Konfigurationsdaten als interne Daten durch einen Algorithmus einer Recheneinheit (52) einer der Kommunikationseinheiten (21, 22, 23);
- einem Übermitteln der Konfigurationsdaten an mindestens eine andere der Kommunikationseinheiten (21, 22, 23);
- einem Anzeigen von basierend auf den Konfigurationsdaten aktualisierten Informationen auf einer Anzeigevorrichtung (31, 32) mindestens einer der Kommunikationseinheiten (21, 22, 23); und
- einem Steuern mindestens eines elektronischen Gerätes (11, 12a,b) der Gruppe (10), das eine der weiteren Kommunikationseinheiten (22) aufweist, durch die entsprechende weitere Kommunikationseinheit (22) basierend auf den Konfigurationsdaten, wobei das Steuern ein Zuschalten oder Abschalten von Funktionen des Gerätes (11, 12a,b) umfasst,
wobei, wenn nicht die erste Kommunikationseinheit (21, 23) die Recheneinheit (52) mit dem Algorithmus aufweist, die empfangenen externen Daten an die Kommunikationseinheit (22) übermittelt werden, die die Recheneinheit (52) mit dem Algorithmus aufweist.

## Claims

1. System for distributing data in a group (10) of interacting electronic devices that have a multiplicity of functions that can be enabled individually, wherein the interacting electronic devices comprise at least one laser beam projection device (11) and at least one laser beam receiving device (12a,b) designed to receive a laser beam from the laser beam projection device (11), wherein
- the laser beam projection device (11) and the at least one laser beam receiving device (12a,b) are designed to be used for measurement tasks in the field of construction installation during the construction of buildings or other structures, and are designed to be used jointly and to interact operatively in action;
- one of the devices has a first electronic communication unit (21, 23);
- the other device or the other devices each have a further communication unit (22);
- the communication units (22) are designed to interchange internal data among one another; and
- the first communication unit (21, 23) has a receiving unit (51) designed to receive external data from an external computer unit (41),
**characterized in that**
- the first communication unit (21, 23) or a further communication unit (22) has an arithmetic unit (52) with an algorithm, wherein the algorithm is designed to generate configuration data based on the external data as internal data, and is designed to transmit the configuration data to at least one other communication unit of the system;
- the first communication unit (21, 23) or a further communication unit (22) has a digital display device (31, 32) for visually displaying information for a user, wherein the display device (31, 32) is designed to display updated information based on the configuration data; and
- at least one of the further communication units (22) has a control unit designed to control the applicable electronic device (11, 12a,b) based on the configuration data, wherein the control comprises activation or deactivation of functions of the device (11, 12a,b), wherein, if the first communication unit (21, 23) does not have the arithmetic unit (52) with the algorithm, the first communication unit (21, 23) is designed to transmit the received external data to the communication unit (22) that has the arithmetic unit (52) with the algorithm.

2. System according to Claim 1,
**characterized in that**
the communication units (21, 22) are designed to interchange the internal data among one another by means of near field communication, in particular wherein each of the communication units (21, 22, 23) has an RFID module.

3. System according to Claim 1 or Claim 2, **characterized in that**
the receiving unit (51)
- is designed as a mobile radio receiving unit for receiving the external data via a mobile radio network; and/or
- is designed as an LPN receiving unit for receiving the external data via a low-power network, in particular LoRa or SigFox,
in particular wherein the receiving unit (51) is designed to detect requests from the external computer unit (41).

4. System according to any one of the preceding claims, **characterized in that**
the external data comprise license-related data, in particular license keys, for the at least two electronic devices (11, 12a,b).

5. System according to any one of the preceding claims,
**characterized in that**
the external data are encrypted, and the arithmetic unit (52) comprises an algorithm designed to decrypt the external data.

6. System according to any one of the preceding claims,
**characterized in that**
the first communication unit (21, 23) comprises both the receiving unit (51) and the arithmetic unit (52).

7. System according to any one of Claims 1 to 5,
**characterized in that**
a second communication unit (22) comprises the arithmetic unit (52) and is designed to transmit the configuration data to at least the first communication unit (21, 23).

8. System according to any one of Claims 1 to 5,
**characterized in that**
a first laser beam receiving device (12a) comprises the first communication unit (23), and the laser beam projection device (11) comprises a second communication unit (22), wherein the second communication unit (22) comprises the arithmetic unit (52) and is designed to transmit the configuration data to at least the first communication unit (23).

9. System according to any one of the preceding claims,
**characterized in that**
at least one of the communication units (21, 22, 23) is designed to capture usage data of at least one device (11, 12a,b) of the group (10) at defined intervals, in particular wherein the respective communication unit comprises an algorithm designed to create a usage profile and, based on the usage profile, to present to a user, on a display device (31, 32), a suggestion for functions that can be enabled for the at least one device (11, 12a,b) .

10. System according to Claim 9,
**characterized in that**
- the internal data comprise maintenance data with information about a maintenance date of at least one device (11, 12a,b) of the group (10), and
- the display device (31, 32) of the at least one device (11, 12a,b) is designed to display the maintenance date,
wherein at least one of the communication units (21, 22, 23)
- comprises a statistics unit with an algorithm designed to calculate the maintenance date of at least one device (11, 12a,b) of the group (10) based on the usage data of the at least one device (11, 12a,b); or
- is designed to send the usage data of the at least one device (11, 12a,b) to the external computer unit (41), the external data comprise information about the maintenance date, and the algorithm of the arithmetic unit (52) is designed to generate the maintenance data based on the external data.

11. System according to any one of the preceding claims, **characterized in that**
at least one of the communication units (21, 22, 23) has a data memory (53) and is designed
- to capture or retrieve information about devices (11, 12a,b) of the group (10),
- to store captured or retrieved information in the data memory (53), and
- to display the information to a user on the display device (31, 32),
in particular wherein the information about a device (11, 12a,b) comprises information about a location of the device (11, 12a,b) and enabled functions of the device (11, 12a,b).

12. System according to any one of the preceding claims,
**characterized in that**
at least one of the communication units (21, 22, 23) is designed
- to detect which other communication units (21, 22, 23) have already had current configuration data transmitted to them; and
- to display to a user on the display device (31, 32) the communication units (21, 22, 23) of which devices (11, 12a,b) are yet to have the current configuration data transmitted to them.

13. System according to any one of the preceding claims,
**characterized in that**
the group (10) comprises at least one protective container (15), which has an interior space designed to receive at least one of the electronic devices (11, 12a,b), wherein
- a digital display device (35) is provided on an outer shell of the protective container (15); and
- a communication unit of the protective container (15) is designed as an interior-space communication unit for communication with communication units (21, 22, 23) of electronic devices (11, 12a,b) located in the interior space.

14. Method (100) for updating data of a group (10) of at least two interacting electronic devices (11, 12) that have a multiplicity of functions that can be enabled individually, wherein the interacting electronic devices comprise a laser beam projection device (11) and at least one laser beam receiving device (12a,b) designed to receive a laser beam from the laser beam projection device (11), wherein the laser beam projection device (11) and the at least one laser beam receiving device (12a,b) are designed to be used for measurement tasks in the field of construction installation during the construction of buildings or other structures, and are designed to be used jointly and to interact operatively in action, wherein one of the devices has a first electronic communication unit (21, 23), the other device or the other devices each have a further electronic communication unit (22), and the communication units (22) are designed to interchange internal data among one another, comprising
- receiving external data from an external computer unit (41) by means of a receiving unit (51) of the first communication unit (21, 23);
- generating, based on the external data, configuration data as internal data by means of an algorithm of an arithmetic unit (52) of one of the communication units (21, 22, 23);
- transmitting the configuration data to at least one other of the communication units (21, 22, 23);
- displaying information, which is updated based on the configuration data, on a display device (31, 32) of at least one of the communication units (21, 22, 23) and
- controlling at least one electronic device (11, 12a,b) of the group (10), which electronic device has one of the further communication units (22), by means of the applicable further communication unit (22) based on the configuration data, wherein the control comprises activation or deactivation of functions of the device (11, 12a,b),
wherein, if the first communication unit (21, 23) does not have the arithmetic unit (52) with the algorithm, the received external data are transmitted to the communication unit (22) that has the arithmetic unit (52) with the algorithm.

## Revendications

1. Système de distribution de données dans un groupe (10) d'appareils électroniques coopérants qui présentent une multitude de fonctions à débloquer individuellement, cependant que les appareils électroniques coopérants présentent au moins un appareil de projection de faisceau laser (11) et au moins un appareil de réception de faisceau laser (12a, b) agencé pour recevoir un faisceau laser de l'appareil de projection de faisceau laser, cependant que
- l'appareil de projection de faisceau laser (11) et le au moins un appareil de réception de faisceau laser sont agencés pour être utilisés lors de la construction de bâtiments ou d'autres structures dans le cadre de travaux de mesure dans le domaine d'installations de construction et sont destinés à être utilisés ensemble et à coopérer sur le plan opérationnel ;
- l'un des appareils présente une première unité électronique de communication (21, 23) ;
- l'autre appareil ou les autres appareils présentent chacun une autre unité de communication (22) ;
- les unités de communication (22) sont agencées pour échanger des données internes entre elles et
- la première unité de communication (21, 23) présente une unité de réception (51) qui est agencée pour recevoir des données externes d'une unité informatique externe (41),
**caractérisé en ce que**
- la première unité de communication (21, 23) ou une autre unité de communication (22) présente une unité de calcul (52) avec un algorithme, cependant que l'algorithme est configuré pour générer, sur la base des données externes, des données de configuration comme données internes et est configuré pour transmettre les données de configuration à au moins une autre unité de communication du système ;
- la première unité de communication (21, 23) ou une autre unité de communication (22) présente un dispositif d'affichage numérique (31, 32) pour l'affichage visuel d'informations pour un utilisateur, cependant que le dispositif d'affichage (31, 32) est configuré pour afficher, sur la base des données de configuration, des informations actualisées et
- qu'au moins une des autres unités de communication (22) présente une unité de commande qui est agencée pour commander l'appareil électronique correspondant (11, 12a, b) sur la base des données de configuration, cependant que la commande comprend une mise en circuit ou une mise hors circuit de fonctions de l'appareil (11, 12a, b),
cependant que, lorsque ce n'est pas la première unité de communication (21, 23) qui présente l'unité de calcul (52) avec l'algorithme, la première unité de communication (21, 23) est agencée pour transmettre les données externes reçues à l'unité de communication (22) qui présente l'unité de calcul (52) avec l'algorithme.

2. Système selon la revendication 1, **caractérisé en ce que** les unités de communication (21, 22, 23) sont agencées pour échanger les données internes entre elles au moyen de communication en champ proche, en particulier cependant que chacune des unités de communication (21, 22, 23) présente un module RFID.

3. Système selon la revendication 1 ou la revendication 2,
**caractérisé en ce que** l'unité de réception (51)
- est agencée comme une unité de réception de radio mobile pour recevoir les données externes par un réseau de radio mobile et/ou
- est agencée comme une unité de réception LPN pour recevoir les données externes par un réseau basse énergie, en particulier LoRa ou SigFox,
en particulier cependant que l'unité de réception (51) est agencée pour recueillir des demandes de l'unité informatique externe (41).

4. Système selon l'une des revendications précédentes,
**caractérisé en ce que**
les données externes présentent des données qui se réfèrent à une licence, en particulier des clés de licence, pour les au moins deux appareils électroniques (11, 12a, b).

5. Système selon l'une des revendications précédentes,
**caractérisé en ce que**
les données externes sont cryptées et l'unité de calcul (52) présente un algorithme qui est agencé pour décrypter les données externes.

6. Système selon l'une des revendications précédentes,
**caractérisé en ce que** la première unité de communication (21, 23) présente l'unité de réception (51) aussi bien que l'unité de calcul (52).

7. Système selon l'une des revendications 1 à 5,
**caractérisé en ce**
**qu'**une seconde unité de communication (22) présente l'unité de calcul (52) et est agencée pour transmettre les données de configuration au moins à la première unité de communication (21, 23).

8. Système selon l'une des revendications 1 à 5,
**caractérisé en ce**
**qu'**un premier appareil de réception de faisceau laser (12a) présente la première unité de communication (23) et l'appareil de projection de faisceau laser (11) une seconde unité de communication (22), cependant que la seconde unité de communication (22) présente l'unité de calcul (52) et est agencée pour transmettre les données de configuration au moins à la première unité de communication (23).

9. Système selon l'une des revendications précédentes,
**caractérisé en ce**
**qu'**au moins une des unités de communication (21, 22, 23) est agencée pour saisir des données d'utilisation d'au moins un appareil (11, 12a, b) du groupe (10), à des intervalles définis, en particulier cependant que l'unité de communication correspondante présente un algorithme qui est agencé pour établir un profil d'utilisation et de présenter à l'utilisateur, sur la base du profil d'utilisation, une proposition de fonctions pouvant être débloquées pour l'au moins un appareil (11, 12a, b) sur un dispositif d'affichage (31, 32).

10. Système selon la revendication 9,
**caractérisé en ce que**
- les données internes comprennent des données de maintenance avec des informations sur une date de maintenance d'au moins un appareil (11, 12a, b) du groupe (10) et
- le dispositif d'affichage (31, 32) de l'au moins un appareil (11, 12a, b) est agencé pour afficher la date de maintenance,
cependant qu'au moins une des unités de communication (21, 22, 23)
- présente une unité de statistique avec un algorithme qui est agencée pour calculer, sur la base des données d'utilisation d'au moins un appareil (11, 12a, b) du groupe (10), la date de maintenance ou
- est agencée pour envoyer les données d'utilisation d'au moins un appareil (11, 12a, b) à l'unité informatique externe (41), les données externes comprenant des informations sur la date de maintenance et l'algorithme de l'unité de calcul (52) est agencée pour générer les données de maintenance sur la base des données externes.

11. Système selon l'une des revendications précédentes,
**caractérisé en ce**
**qu'**au moins une des unités de communication (21, 22, 23) présente une mémoire de données (53) et est agencée
- pour saisir ou accéder aux informations sur des appareils (11, 12a, b) du groupe (10),
- pour mémoriser des informations saisies ou demandées dans la mémoire de données (53) et
- pour afficher les informations pour un utilisateur sur le dispositif d'affichage (31, 32),
en particulier cependant que les informations sur un appareil (11, 12a, b) comprennent des informations sur un emplacement de l'appareil (11, 12a, b) et des fonctions débloquées de l'appareil (11, 12a, b).

12. Système selon l'une des revendications précédentes,
**caractérisé en ce**
**qu'**au moins une des unités de communication (21, 22, 23) est agencée
- pour détecter à quelles autres unités de communication (21, 22, 23) des données de configuration actuelles ont déjà été transmises et
- pour afficher pour un utilisateur sur le dispositif d'affichage (31, 32) auxquelles unités de communication (21, 22, 23) de quels appareils (11, 12a, b) les données actuelles de configuration doivent encore être transmises.

13. Système selon l'une des revendications précédentes,
**caractérisé en ce**
**que** le groupe (10) comprend au moins un conteneur protecteur (15) qui présente un espace intérieur qui est agencé pour accueillir au moins l'un des appareils électroniques (11, 12a, b), cependant
- **qu'**il est prévu un dispositif d'affichage numérique (35) sur une enveloppe extérieure du conteneur protecteur (15) et
- **qu'**une unité de communication du conteneur protecteur (15) est agencée comme unité de communication de l'espace intérieur pour la communication avec des unités de communication (21, 22, 23) d'appareils électroniques (11, 12a, b) qui se trouvent dans l'espace intérieur.

14. Procédé (100) pour actualiser des données d'un groupe (10) d'au moins deux appareils électroniques qui coopèrent (11, 12) qui présentent une multitude de fonctions à débloquer individuellement, cependant que les appareils électroniques coopérants présentent au moins un appareil de projection de faisceau laser (11) et au moins un appareil de réception de faisceau laser (12a, b) agencé pour recevoir un faisceau laser de l'appareil de projection de faisceau laser, cependant que l'appareil de projection de faisceau laser (11) et le au moins un appareil de réception de faisceau laser (12a, b)sont agencés pour être utilisés lors de la construction de bâtiments ou d'autres structures dans le cadre de travaux de mesure dans le domaine des installations de construction et sont destinés à être utilisés ensemble et à coopérer sur le plan opérationnel, l'un des appareils présente une première unité électronique de communication (21, 23), l'autre appareil ou les autres appareils présentent chacun une autre unité de communication (22) et les unités de communication (22) sont agencées pour échanger des données internes entre elles avec
- une réception de données externes d'une unité informatique externe (41) par une unité de réception (51) de la première unité électronique de communication (21,23) ;
- une génération, sur la base des données externes, de données de configuration comme données internes par un algorithme d'une unité de calcul (52) d'une des unités de communication (21, 22, 23) ;
- une transmission des données de configuration à au moins une autre des unités de communication (21, 22, 23) ;
- un affichage d'informations actualisées, sur la base des données de configuration, sur un dispositif d'affichage (31, 32) d'au moins l'une des unités de communication (21, 22, 23) et
- une commande d'au moins un appareil électronique (11, 12a, b) du groupe (10) qui présente une des autres unités de communication (22) par l'autre unité de communication correspondante (22) sur la base des données de configuration, cependant que la commande comprend une mise en circuit ou une mise hors circuit de fonctions de l'appareil 11, 12a, b),
cependant que, lorsque ce n'est pas la première unité de communication (21,23) qui présente l'unité de calcul (52) avec l'algorithme, les données externes reçues sont transmises à l'unité de communication (22) qui présente l'unité de calcul (52) avec l'algorithme.
